# EUROPÄISCHE PATENTSCHRIFT

(11) **EP 0 882 909 B1**
(45) Veröffentlichungstag und Bekanntmachung des Hinweises auf die Patenterteilung: **19.06.2002**
(21) Anmeldenummer: 98107490.9
(22) Anmeldetag: 24.04.1998
(51) Int. Cl.: F16H 7/08, F16H 7/18

(54) **Gleitschiene zum Führen und/oder Spannen einer Kette**
Sliding rail for guiding and/or tensioning chains
Glissière de guidage et/ou serrage pour une chaîne

(30) Priorität: 05.06.1997 DE 19723511
(43) Veröffentlichungstag der Anmeldung: 09.12.1998
(73) Patentinhaber: Dr.Ing.h.c. F. Porsche Aktiengesellschaft, 70435 Stuttgart (DE); Diehm, Volker, 74193 Schwaigern (DE)
(72) Erfinder: Diehm, Volker, 74193 Schwaigern (DE)

(56) Entgegenhaltungen:
- WO-A-92/10694
- DE-A- 19 609 583
- DE-A- 19 610 301
- DE-U- 9 304 833
- DE-U- 29 703 162
- US-A- 3 772 071

## Beschreibung

Die Erfindung bezieht sich auf eine Gleitschiene nach dem Oberbegriff des Patentanspruchs 1.

Eine bekannte, gattungsgemässe Gleitschiene DE-PS 37 06 136, die einen Gleitbelagkörper und einen Träger, jeweils aus Kunststoff hergestellt, umfaßt, hat sich in der Praxis beim Porsche 911 Carrera Motor - Porsche Service Information 94, 911 Carrera, Bild 649 vorbildlich bewährt, und zwar als Spannschiene wie auch als Gleitschiene.

Außerdem: Bei hoher Standfestigkeit unter anspruchsvollen Belastungsfällen hat sich vor allem gezeigt, daß Gewicht und Herstellungskosten deutlich niedriger sind als bei einer konventiellen Schiene, bestehend aus einem Alu-Träger und einem Kunststoff-Gleitbelagkörper, DE-OS 35 06 010.

Aufgabe der Erfindung ist es, diese Gleitschiene weiter zu optimieren dergestalt, daß sie auch bei einem Einsatz an einem Ketten-Nockenwellenantrieb einer Brennkraftmaschine spezieller Betriebsart, z.B. Selbstzünder, geräuscharm mit der Kette zusammenarbeitet.

Die mit der Erfindung hauptsächlich erzielten Vorteile sind darin zu sehen, daß der Gleitbelagkörper dank Werkstoff mit gummielastischem Verhalten dazu beiträgt, daß ausgeprägte Kettenbewegungen, wie sie beispielsweise bei Dieselmotoren, insbesondere im Leerlauf nahen Gebiet, auftreten, ohne störende Betriebsgeräusche zu verursachen, von der Gleitschiene aufgenommen werden. Ausserdem stillt der Haftvermittler zwischen Gleitbelagkörper und Träger sicher, dass letztere hochbelastbar und sicher miteinander verbunden sind.

In der Zeichnung wird ein Ausführungsbeispiel der Erfindung gezeigt, das nachstehend näher beschrieben ist.

Es zeigt
- Fig. 1: eine Seitenansicht einer Gleitschiene,
- Fig. 2: einen Schnitt nach der Linie II-II der Fig. 1,
- Fig. 3: eine schematische Darstellung eines Werkzeuges für die Herstellung der Gleitschiene.

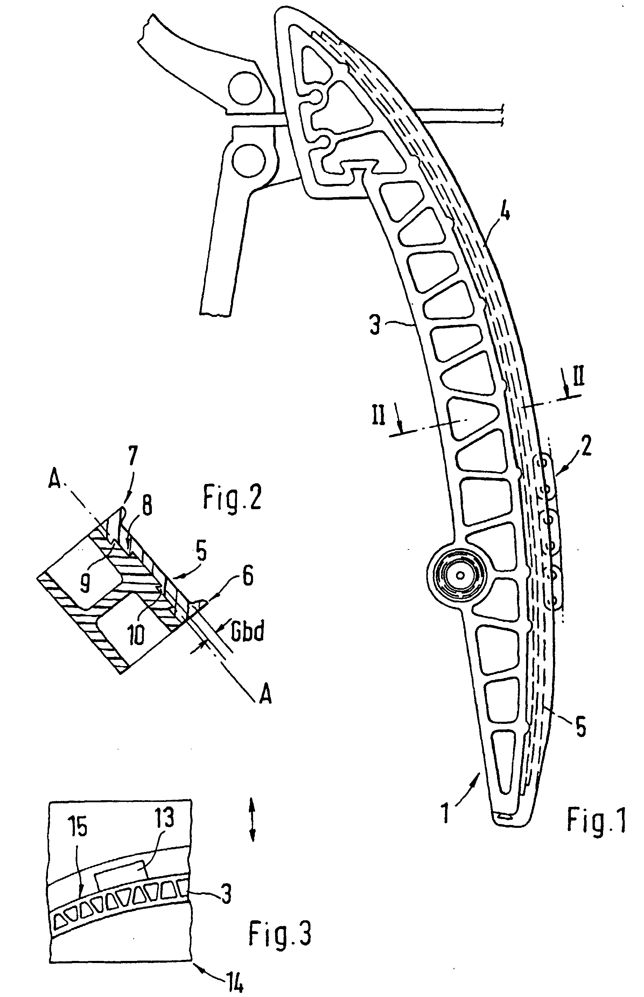

In Fig. 1 ist eine Gleitschiene 1 dargestellt, die zur Führung oder zum Spannen einer Kette 2 dient. Sie ist ein Endlosglied eines Kettentriebs. Der Kettentrieb wirkt zwischen einer Kurbelwelle und einer Nockenwelle - Porsche Service Information Technik '94, 911 Carrera, Bild 649; Porsche Boxster Sonderausgabe ATZ, Automobiltechnische Zeitschrift und MTZ, Motortechnische Zeitschrift, Dezember 1996, S. 55 und Sport Auto 1/1997, S. 25-.

Die Gleitschiene 1 wird gebildet durch einen Träger 3 und einen Gleitbelagkörper 4, der eine Gleitfläche 5 für die Kette 2 umfasst. Der Träger 3 besteht aus Kunststoff, vorzugsweise Polyamid mit Glasfaserzusätzen, ist also noch belastbar. Dagegen findet für den Gleitbelagkörper 4 ein Werkstoff mit gummielastischem Verhalten Verwendung, wie z.B. Kautschuk oder Elastomer. Die Dicke Gbd des Gleitbelagkörpers 4 und seine Härte werden in Abhängigkeit der Beanspruchung durch den Kettentrieb rechnerisch oder iterativ definiert, wobei sich bei Entwicklungen bezeigt hat, daß eine Dicke Gbd von zwischen 2,00 bis 6,00 mm einen Wert darstellt, der für viele denkbare Einsatzfälle geeignet ist.

Die Gleitfläche 7 wird von Schultern 6, 7 begrenzt, so daß der Gleitbelagkörper 4 einen U-förmigen Umriss aufweist.

Der Träger 3 und der Gleitbelagkörper 4 sind in einer Ebene A-A zusammengesetzt - Fig. 2 -. Zwischen diesen eine Einheit bildenden Bauteilen sind ineinandergreifende und sich gegenseitig hintergreifende Vorsprünge 8 vorgesehen, die im Ausführungsbeispiel durch zwei Schwalbenschwanzverbindungen 9, 10 gebildet werden; sie erstrecken sich beispielsweise über die Länge der Gleitschiene 1. Die Gleitschiene 1 wird wie folgt hergestellt: Zunächst wird der Träger 3 im Spritzgußverfahren gefertigt, und zwar mit den zugehörigen Profilierungen der Schwalbenschwanzverbindungen 11, 12 (Fig. 2). Danach wird der Träger 3 als Basiskörper verwendet und der Gleitbelagkörper 4 im Spritzgußverfahren mit besagtem Träger vereinigt.

Soweit für den Gleitbelagkörper Kautschuk eingesetzt wird, wird ein unvernetzter Kautschuk-Rohling 13, z.B. in Kubus- oder Prismaform, auf den Träger 3 aufgesetzt und in einem Werkzeug 14 mittels Temperatur und Druck in seinen Endzustand geformt. Der Träger 3 wird zuvor auf der dem Kautschuk-Rohling zugekehrten Seite 15 mit einem Haftvermittler (Primer) versehen.

## Patentansprüche

1. Gleitschiene (1) zum Führen und/oder Spannen einer Kette (2), insbesondere für einen Nockenwellenantrieb einer Brennkraftmaschine, umfassend einen Gleitbelagkörper (4) und einen Träger (3), die aus verschleißfestem bzw. hoch belastbarem Kunststoff bestehen, wobei der Gleitbelagkörper (4) und der Träger (3) über sich gegenseitig hintergreifende Verbindungen in Lage gehalten werden, **dadurch gekennzeichnet, dass**
- der Gleitbelagkörper (4) aus einem Werkstoff mit gummielastischem Verhalten, wie Kautschuk, Elastomer oder dgl. besteht,
- zwischen dem Gleitbelagkörper (4) und dem Träger (3), z.B. aus Polyamid, ein Haftvermittler vorgesehen ist,
- der Haftvermittler auf den vorgefertigten Träger (3), aufgebracht wird.

2. Gleitschiene nach Anspruch 2, **dadurch gekennzeichnet, daß** der Gleitbelagkörper (4) im Ausgangszustand ein unvernetzter Rohling ist.

3. Gleitschiene nach Anspruch 4, **dadurch gekennzeichnet, daß** der Rohling in einem Werkzeug 14, in dem der Träger (3) gehalten ist, mittels Wärme und Druck in seinen Endzustand geformt wird.

4. Gleitschiene nach Anspruch 1, **dadurch gekennzeichnet, daß** der Gleitbelagkörper (4) eine Dicke (Gbd) von zwischen 2,00 bis 6,00 mm aufweist.

## Claims

1. A sliding rail (1) for guiding and/or tensioning a chain (2), in particular for a camshaft drive of an internal combustion engine, comprising a sliding lining body (4) and a support (3), which consist of wear-resistant plastics material or plastics material capable of withstanding heavy stressing, wherein the sliding lining body (4) and the support (3) are held in position by way of connexions engaging one behind the other, **characterized in that**
- the sliding lining body (4) consists of a material with rubber-resilient behaviour, such as rubber, elastomer or the like,
- a bonding agent is provided between the sliding lining body (4) and the support (3), for example of polyamide, and
- the bonding agent is applied to the support (3) produced beforehand.

2. A sliding rail according to Claim 1, **characterized in that** in the initial state the sliding lining body (4) is a non-cross-linked blank.

3. A sliding rail according to Claim 2, **characterized in that** the blank is shaped in its final state by means of heat and pressure in a tool 14 in which the support (3) is held.

4. A sliding rail according to Claim 1, **characterized in that** the sliding lining body (4) has a thickness (Gbd) of between 2·00 and 6·00 mm.

## Revendications

1. Glissière (1) pour guider et/ou tendre une chaîne (2), en particulier pour un dispositif d'entraînement d'arbre à came d'un moteur à combustion interne, comprenant un corps de garniture de glissement (4) et un support (3) qui sont réalisés dans une matière plastique résistante à l'usure ou pouvant supporter des charges élevées, le corps de garniture de glissement (4) et le support (3) étant immobilisés par des liaisons qui passent réciproquement l'une derrière l'autre, **caractérisée en ce que**
- le corps de garniture de glissement (4) est réalisé dans une matière qui présente le comportement élastique du caoutchouc, tel que caoutchouc, élastomère ou similaire,
- entre le corps de garniture de glissement (4) et le support (3), par exemple en polyamide, est prévu un adhésif,
- l'adhésif est appliqué sur le support (3) préfabriqué.

2. Glissière selon la revendication 1, **caractérisée en ce que** le corps de garniture de glissement (4) à l'état initial est une ébauche non réticulée.

3. Glissière selon la revendication 2, **caractérisée en ce que** l'ébauche est amenée à sa forme définitive, par chaleur et pression, dans un outil (14) dans lequel est maintenu le support (3).

4. Glissière selon la revendication 1, **caractérisée en ce que** le corps de garniture de glissement (4) présente une épaisseur (Gbd) comprise entre 2,00 et 6,00 mm.
